# EUROPÄISCHE PATENTSCHRIFT

(11) **EP 2 294 292 B1**
(45) Veröffentlichungstag und Bekanntmachung des Hinweises auf die Patenterteilung: **29.03.2017**
(21) Anmeldenummer: 09765682.1
(22) Anmeldetag: 08.05.2009
(51) Int. Cl.: F01N 3/023, F01N 3/025, F01N 3/08, F01N 9/00, F02D 41/02, F02D 41/14

(54) **VERFAHREN UND VORRICHTUNG ZUM BETREIBEN EINES ABGASNACHBEHANDLUNGSSYSTEMS**
METHOD AND DEVICE FOR OPERATING AN EXHAUST GAS AFTER-TREATMENT SYSTEM
PROCÉDÉ ET DISPOSITIF POUR FAIRE FONCTIONNER UN SYSTÈME DE POST-TRAITEMENT DES GAZ D'ÉCHAPPEMENT

(30) Priorität: 20.06.2008 DE 102008002557
(43) Veröffentlichungstag der Anmeldung: 16.03.2011
(73) Patentinhaber: Robert Bosch GmbH, 70442 Stuttgart (DE)
(72) Erfinder: FRITSCH, Andreas, 71332 Waiblingen (DE)
(86) Internationale Anmeldenummer: PCT/EP2009/055599
(87) Internationale Veröffentlichungsnummer: WO 2009/153102

(56) Entgegenhaltungen:
- EP-A- 1 426 592
- EP-A- 1 433 932
- EP-A- 1 930 572
- FR-A- 2 849 103
- US-A1- 2007 044 455

## Beschreibung

### Stand der Technik

Die Erfindung betrifft ein Verfahren zur Regelung einer Kraftstoffzugabe zur Einleitung der Regeneration eines Partikelfilters im Abgaskanal einer Brennkraftmaschine, wobei in Abgasrichtung vor dem Partikelfilter zumindest ein Katalysator zur Oxidation von Kohlenwasserstoffen vorgesehen ist und wobei die Einleitung der Regeneration des Partikelfilters durch eine Nacheinspritzung von Kraftstoff in zumindest einen Brennraum der Brennkraftmaschine oder durch eine Einspritzung von Kraftstoff in einen Abgaskanal vor dem Katalysator gestartet wird.

Die Erfindung betrifft weiterhin eine Vorrichtung zur Regelung einer Kraftstoffzugabe zur Einleitung der Regeneration eines Partikelfilters im Abgaskanal einer Brennkraftmaschine, wobei in Abgasrichtung vor dem Partikelfilter zumindest ein Katalysator zur Oxidation von Kohlenwasserstoffen vorgesehen ist, wobei zwischen dem Katalysator und dem Partikelfilter eine erste Lambdasonde angeordnet ist und wobei zur Regelung der Kraftstoffzugabe ein Regler in einer Motorsteuerung vorgesehen ist

Bei Dieselmotoren werden aufgrund der geforderten niedrigen Emissionsgrenzwerte Abgasnachbehandlungssysteme mit Oxidationskatalysatoren und in Abgasrichtung nachgeschalteten Partikelfiltern eingesetzt. Partikelfilter weisen eine begrenzte Speicherfähigkeit auf und müssen zur Wiederherstellung der Reinigungswirkung in bestimmten Abständen regeneriert werden. Dies geschieht typischerweise alle 250 bis 1000 km. Bei Russpartikelfiltern wird die Regeneration durch eine Erhöhung der Abgastemperatur auf typischerweise 600 °C bis 650 °C eingeleitet, so dass der in dem Partikelfilter eingelagerte Ruß abzubrennen beginnt. Dies kann durch innermotorische Maßnahmen, zum Beispiel in der Gemischaufbereitung des Motors, oder durch nachmotorische Maßnahmen wie einer an dem Oxidationskatalysator verbrennenden Nacheinspritzung in den Abgaskanal erfolgen. In beiden Varianten wird in dem Partikelfilter eine exotherme Reaktion angestoßen, die einen Abbrand der Russpartikel bewirkt und innerhalb einiger Minuten (z.B. 20 Minuten) den Partikelfilter regeneriert.

Insbesondere bei Verwendung thermisch kritischer Filtermaterialien muss darauf geachtet werden, dass die maximale Temperatur der Abgase vor dem Partikelfilter sehr genau eingehalten wird, da ansonsten irreversible Schädigungen des Partikelfilters auftreten können. Dabei ist zusätzlich zu beachten, dass durch den exotherm verlaufenden Partikelabbrand während der Regeneration eine zusätzliche und gegebenenfalls inhomogene Erwärmung des Partikelfilters erfolgt, was ebenfalls zu einer Schädigung des Partikelfilters führen kann.

Gemäß dem Stand der Technik erfolgt die Temperaturanhebung vor dem Partikelfilter häufig über eine an dem Oxidationskatalysator verbrennende Nacheinspritzung, wobei die Abgastemperatur vor dem Oxidationskatalysator durch motorische Maßnahmen auf eine Temperatur über light off des Oxidationskatalysators angehoben wird. Die Regelung der Temperatur vor dem Oxidationskatalysator und vor dem Partikelfilter erfolgt dabei auf Basis einer jeweiligen Temperaturmessung. Dabei werden häufig die Temperaturregelung vor dem Oxidationskatalysator mit einem inneren Regelkreis und die Temperaturregelung vor dem Partikelfilter in einem äußeren Regelkreis durchgeführt.

Zur Regeneration eines als Oxidationskatalysator verwendeten NOx-Speicherkatalysators wird dieser aufgeheizt, indem ihm über Nacheinspritzung ein geeignetes Luft-Kraftstoff-Gemisch zugeführt wird. Dabei wird nach dem Stand der Technik das Luft-Kraftstoff-Verhältnis mit einer vor dem NOx-Speicherkatalysator angebrachten Lambdasonde mit zugehöriger Regelung überwacht. Zum Schutz des Partikelfilters wird üblicherweise dieselbe Regelung mit anderen Parametern verwendet.

Eine Abgasnachbehandlungsvorrichtung bzw. ein Verfahren der eingangs genannten Art ist in der EP 1 426 592 A2 angegeben. Dabei wird während des Regenerationsprozesses eines Partikelfilters das Luft/Brennstoff-Verhältnis unter Einbeziehung einer zwischen einem NOx-Katalysator und einem Partikelfilter angeordneten Lambdasonde geregelt. Durch das Verfahren, bzw. die Vorrichtung soll eine Verschlechterung von Emissionswerten während des Regenerationsprozesses für einen Partikelfilter vermieden werden.

Aus der DE 103 33 441 A1 ist ein Verfahren zur Steuerung eines Abgasnachbehandlungssystems, insbesondere eines Partikelfilters, einer Brennkraftmaschine bekannt, wobei ein Sollwert für ein Lambdasignal oder eine Änderung eines Lambdasignals vorgebbar ist und ein Istwert für das Lambdasignal oder für die Änderung des Lambdasignals erfasst wird, und wobei, ausgehend von dem Vergleich zwischen dem Stellelement, mit dem die Reaktion im Abgasnachbehandlungssystem steuerbar ist, derart vorgegeben wird, dass sich der Istwert dem Sollwert annähert. Dabei kann es vorgesehen sein, dass der Sollwert derart vorgegeben wird, dass sich eine vorgegebene Temperatur im Abgasbehandlungssystem einstellt.

Durch die Lambda-Regelung wird die Sauerstoffkonzentration im Abgas auf einen Wert geregelt, der zu einer optimalen Abbrandgeschwindigkeit während der Regeneration des Partikelfilters führt. Ein in einer Motorsteuerung hinterlegter Regler variiert dazu üblicherweise die Menge der angelagerten Nacheinspritzung um den vorgegebenen Lambdawert zu erzielen. Zur Bestimmung des Lambdawerts werden die Signale von vor und/oder nach dem Abgasnachbehandlungssystem angeordneten Lambda-Sonden ausgewertet, wobei das Abgasnachbehandlungssystem zumindest einen Partikelfilter aufweist.

In der EP 1930 572 A2 der Anmelderin wird ein Verfahren zum Betreiben eines Abgasnachbehandlungssystems im Abgaskanal einer Brennkraftmaschine mit zumindest einem Oxidationskatalysator und einem dem Oxidationskatalysator nachgeordneten Partikelfilter beschrieben, wobei eine Regeneration des Partikelfilters durch eine Temperaturerhöhung des Abgases vor dem Partikelfilter durch Luftsystemeingriffe und/oder durch innermotorische Maßnahmen und/oder durch eine an dem Oxidationskatalysator verbrennende Nacheinspritzung eingeleitet wird und wobei eine Bestimmung der Abgaszusammensetzung vor dem Partikelfilter vorgenommen wird. In der Schrift wird eine Regelung der Temperatur des Abgases vor dem Partikelfilter durch Bestimmung und Regelung einer mit der Temperatur des Abgases und/oder einer Änderung der Temperatur des Abgases korrelierenden Abgaszusammensetzung und/oder Änderung der Abgaszusammensetzung beansprucht.

Die EP 1433 932 A1 befasst sich mit einer Vorrichtung und einem Verfahren, um einen NOx-Katalysator eines Dieselmotors von Schwefelvergiftung zu befreien, wobei eine stromauf des NOx-Katalysators angeordnete Lambdasonde Verwendung findet.

Ein Nachteil der vorgenannten Verfahren ist, dass im Bereich aktiver Lambdaregelung keine späte Nacheinspritzung abgesetzt werden kann, da die Querempfindlichkeit der Lambdasonde für Kohlenwasserstoffe die Messwerte beeinflussen würde. Im lambdageregelten Bereich kann daher die Abgastemperatur nicht aktiv über die Motorsteuerung und Vorgabe des Lambdawerts beeinflusst werden. Auch eine Begrenzung der Temperatur des Partikelfilters über die Lambdaregelung ist somit in diesem Bereich nicht möglich.

Es ist Aufgabe der Erfindung, ein Verfahren zum Betreiben eines Abgasnachbehandlungssystems bereitzustellen, welches eine verbesserte Steuerung und Begrenzung der Abgastemperatur und der Temperatur des Partikelfilters ermöglicht.

### Offenbarung der Erfindung

### Vorteile der Erfindung

Die das Verfahren betreffende Aufgabe der Erfindung wird dadurch gelöst, dass als Regelgröße für die Regelung der Kraftstoffzugabe das Signal einer zwischen dem Katalysator und dem Partikelfilter angeordneten ersten Lambdasonde verwendet wird. Durch diese Vorgehensweise kann der Katalysator die durch die Nacheinspritzung auftretenden Kohlenwasserstoffe umsetzen und eine Beeinflussung der Messwerte der Lambdasonde wegen deren Querempfindlichkeit für Kohlenwasserstoffe vermeiden. Wird als Katalysator ein NOx-Speicherkatalysator eingesetzt, wird zu Überwachungszwecken in Abgasrichtung nach diesem üblicherweise eine Lambdasonde angeordnet, so dass durch das erfindungsgemäße Verfahren keine Mehrkosten entstehen. In Systemen mit einem Oxidationskatalysator kann die Lambdasonde in Abgasrichtung hinter diesem angeordnet werden, so dass auch in diesem Fall keine Mehrkosten entstehen. Das Verfahren erlaubt es, auch im Bereich aktiver Lambdaregelung eine späte Nacheinspritzung abzusetzen und die Abgastemperatur auch in diesem Bereich aktiv zu beeinflussen. Es wird - im Rahmen der physikalischen Grenzen - eine Entkopplung von Temperatur und Sauerstoff im Abgas ermöglicht.

Erfindungsgemäß wird als Katalysator ein Oxidationskatalysator oder ein NOx-Speicherkatalysator verwendet.

Wird als Regelgröße für die Regelung der Einleitung der Regeneration des Partikelfilters das Signal der ersten Lambdasonde, welche nach dem Katalysator angeordnet ist, verwendet, und wird als Regelgröße für eine Regelung der Kraftstoffzugabe zur Regeneration des NOx-Speicherkatalysators das Signal einer zweiten Lambdasonde, welche vor dem Katalysator angeordnet ist, verwendet, kann die Temperatursteuerung und die Temperaturbegrenzung für den Partikelfilter ganz oder teilweise auch im Bereich aktiver Lambdaregelung erfolgen.

Erfindungsgemäß werden die Regelung der Kraftstoffzugabe zur Einleitung der Regeneration des Partikelfilters und die Regelung der Kraftstoffzugabe zur Regeneration des vorgeschalteten NOx-Speicherkatalysators mit dem selben Regler mit unterschiedlichen Regelparametern durchgeführt.

Wird bei Verwendung des Oxidationskatalysators als Regelgröße für die Lambdaregelung der Brennkraftmaschine im Normalbetrieb das Signal der ersten Lambdasonde, welche nach dem Katalysator angeordnet ist, verwendet, entstehen keine zusätzlichen Kosten zur Umsetzung des Verfahrens.

In einer Ausführungsform erfolgt die Regelung der Kraftstoffzugabe zur Einleitung der Regeneration des Partikelfilters durch eine Anpassung des Sollwertes der Lambdaregelung. Diese Sollwertbildung berücksichtigt die Menge an später Nacheinspritzung dergestalt, dass diese Menge, oder ein Teil davon, umgerechnet in einen Lambda-Unterschied am Arbeitspunkt, vom Sollwert subtrahiert wird.

Eine Verfahrensalternative sieht vor, dass die Nacheinspritzung von Kraftstoff in zumindest einen Brennraum der Brennkraftmaschine aus mehreren Teileinspritzungen besteht.

Die die Vorrichtung betreffende Aufgabe der Erfindung wird dadurch gelöst dass der Regler zur Regelung der Kraftstoffzugabe zur Einleitung der Regeneration des Partikelfilters mit dem Ausgangssignal der ersten Lambdasonde beaufschlagt ist. Diese erste Lambdasonde ist in Abgasrichtung nach dem die Kohlenwasserstoffe oxidierenden Katalysator angeordnet, wobei im Abgaskanal auch mehrere Katalysatoren angeordnet sein können. Hierdurch kann sich eine Querempfindlichkeit der Lambdasonde für Kohlenwasserstoffe nicht verfälschend auf die Bestimmung der Abgaszusammensetzung auswirken.

Ist ein NOx-Speicherkatalysator als oxidierender Katalysator vorgesehen, ist der Regler zur Regelung der Kraftstoffzugabe zur Regeneration des NOx-Speicherkatalysators und der Kraftstoffzugabe zur Einleitung der Regeneration des Partikelfilters vorgesehen und ist ein Umschalter zur Beaufschlagung des Reglers im Motorsteuergerät mit dem Ausgangssignal einer vor dem NOx-Speicherkatalysator angeordneten zweiten Lambdasonde während der Regeneration des NOx-Speicherkatalysators vorgesehen, kann die Vorrichtung zur Regeneration des NOx-Speicherkatalysators und des Partikelfilters verwendet werden und auch im Bereich aktiver Lambdaregelung eine Regelung und Überwachung der Temperatur des Partikelfilters vorgenommen werden.

### Kurze Beschreibung der Zeichnung

Die Erfindung wird im Folgenden anhand eines in der Figur dargestellten Ausführungsbeispiels näher erläutert. Es zeigt:

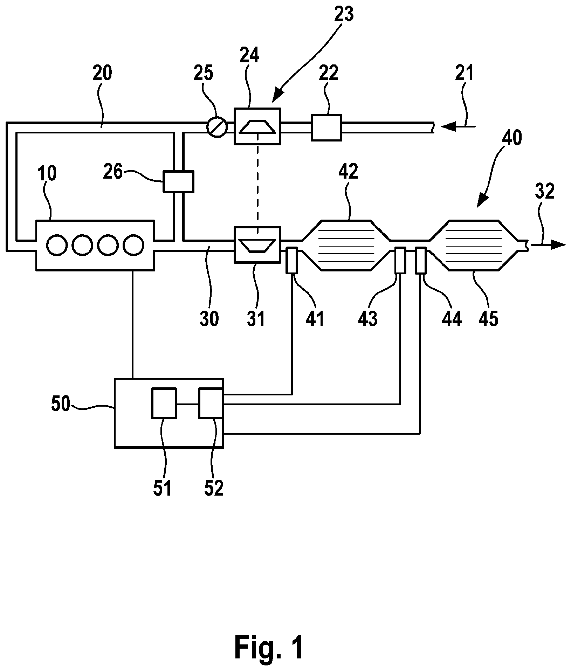

- Figur 1: in schematischer Darstellung das technische Umfeld, in dem die Erfindung eingesetzt wird.

### Ausführungsform der Erfindung

Figur 1 zeigt in schematischer Darstellung das technisch Umfeld, in dem die Erfindung eingesetzt werden kann. Dargestellt ist eine Brennkraftmaschine 10 in Form eines Dieselmotors mit einem Luftzufuhrkanal 20, in dem ein Zuluftstrom 21 geführt ist, und einem Abgaskanal 30, in dem ein Abgasstrom 32 der Brennkraftmaschine 10 geführt ist. Entlang des Luftzufuhrkanals 20 sind in Strömungsrichtung des Zuluftstroms 21 ein Heißluftfilmmassensensor 22 HFM, eine Kompressionsstufe 24 eines Turboladers 23 und eine Drosselklappe 25 angeordnet. Eine Abgasrückführung 26 verbindet den Luftzufuhrkanal 20 mit dem Abgaskanal 30. In Strömungsrichtung des Abgasstromes 32 sind nach der Brennkraftmaschine 10 eine Abgasturbine 31 des Turboladers 23 sowie als Bestandteile eines Abgasnachbehandlungssystems 40 ein oxidierender Katalysator 42 und ein Partikelfilter 45 vorgesehen.

Über den Luftzufuhrkanal 20 wir der Brennkraftmaschine 10 Frischluft zugeführt. Die Frischluft wird dabei von der Kompressionsstufe 24 des Turboladers 23, welche über die Abgasturbine 31 vom Abgasstrom 32 angetrieben wird, komprimiert. Durch die Drosselklappe 25 kann die zugeführte Luftmenge, die von dem Heißluftfilmmassensensor 22 bestimmt wird, eingestellt werden. Zur Schadstoffreduzierung wird dem Zuluftstrom 21 über die Abgasrückführung 26 in von den Betriebsparametern der Brennkraftmaschine 10 abhängigen Mengen Abgas aus dem Abgaskanal 30 zugemischt.

In dem Abgasnachbehandlungssystem 40 werden von der Brennkraftmaschine 10 emittierte Schadstoffe umgesetzt beziehungsweise ausgefiltert. So werden in dem oxidierenden Katalysator 42 Kohlenwasserstoffe oxidiert, während der Partikelfilter 45 Rußpartikel zurückhält. Der Katalysator 42 kann als NOx-Speicherkatalysator ausgeführt sein und in dieser Ausführung Stickoxide aus dem Abgas umsetzen.

Durch den Betrieb der Brennkraftmaschine 10 füllt sich der Partikelfilter 45, bis das Erreichen seiner Speicherkapazität signalisiert wird. Daraufhin wird eine Regenerationsphase des Partikelfilters 45 angestoßen, bei der die in dem Partikelfilter 45 gespeicherten Partikel in einer exotherm verlaufenden Reaktion verbrannt werden. Um diese exotherme Reaktion einzuleiten sind vor dem Partikelfilter 45 Abgastemperaturen von 600°C bis 650°C notwendig. Da diese Temperaturen bei normalem Betrieb der Brennkraftmaschine 10 nur nahe der Volllast erreicht werden, muss ein Temperaturanstieg durch zusätzliche Maßnahmen bewirkt werden. Insbesondere im Fall niedriger Motorlasten und Drehzahlen sind neben Luftsystemeingriffen, beispielsweise über die Drosselklappe 25, weitere Maßnahmen im Umfeld der Kraftstoffeinspritzung erforderlich. Diese können innermotorische Maßnahmen wie eine Spät-Verschiebung der Haupteinspritzung oder eine in der Brennkraftmaschine 10 drehmomentneutral verbrennende Nacheinspritzung sein. Es kann auch eine in den Abgaskanal 30 vor dem Katalysator 42 zugeführte und an dem Katalysator 42 verbrennende Nacheinspritzung vorgesehen sein.

Zur Überwachung der Temperatur des Abgases von dem Partikelfilter 45 ist ein Temperatursensor 44 vorgesehen, der mit einem Motorsteuergerät 50 verbunden ist, das auch die Zudosierung von Kraftstoff zur Brennkraftmaschine 10 über eine Signalleitung steuert. Die Überwachung der Temperatur des Abgases ist notwendig um eine Schädigung des Partikelfilters 45 zu verhindern. Erfindungsgemäß wird die Abgaszusammensetzung während einer Regeneration des Partikelfilters 45 mit einer vor dem Partikelfilter 45 angeordneten ersten Lambdasonde 43 überwacht, die mit einem im Motorsteuergerät 50 vorgesehenen Regler 51 verbunden ist. Der Regler 51 bestimmt Menge und Zeitablauf der Dosierung von Kraftstoff und steuert auch die Nacheinspritzung. In dieser Anordnung können Kohlenwasserstoffe im Abgas an dem oxidierenden Katalysator 42 oxidiert und damit entfernt werden, so dass die Querempfindlichkeit der ersten Lambdasonde 43 für Kohlenwasserstoffe deren Messwerte nicht verfälscht.

Während einer Regeneration des als NOx-Speicherkatalysator ausgeführten Katalysators 42 wird vom Motorsteuergerät 50 eine Nacheinspritzung von Kraftstoff zur Anhebung der Abgastemperatur veranlasst und die Abgaszusammensetzung vor dem Katalysator 42 mit einer zweiten Lambdasonde 41 bestimmt. In einer Ausführungsform der Erfindung ist vorgesehen, dass vor dem Regler 51 im Motorsteuergerät 50 ein Umschalter 52 vorgesehen ist, so dass zumindest zeitweise während der Regeneration des Katalysators 42 dem Regler 51 das Ausgangssignal der zweiten Lambdasonde 41 zugeführt werden kann und während einer Regeneration des Partikelfilters 45 dem Regler 51 das Ausgangssignal der ersten Lambdasonde 43 zugeführt werden kann. In dieser Anordnung kann eine späte Nacheinspritzung auch im lambdageregelten Betrieb der Brennkraftmaschine 10 vorgenommen werden, ohne dass die Querempfindlichkeit von Lambdasonden für Kohlenwasserstoffe die Bestimmung der Abgaszusammensetzung verfälscht. Somit können Abgaszusammensetzung und Temperatur des Abgases gleichzeitig und weitgehend unabhängig voneinander eingestellt werden.

Nicht dargestellt sind für den Betrieb der Brennkraftmaschine 10 und des Abgasnachbehandlungssystems 40 notwendige Einheiten zur Kraftstoffzuführung sowie Einheiten zur Beladungsdiagnose des Partikelfilters 45.

## Patentansprüche

1. Verfahren zur Regelung einer Kraftstoffzugabe zur Einleitung der Regeneration eines im Abgaskanal (30) einer Brennkraftmaschine (10) angeordneten Partikelfilters (45) und eines in Abgasrichtung vor dem Partikelfilter (45) angeordneten NOx-Speicherkatalysators (42) zur Oxidation von Kohlenwasserstoffen, wobei die Einleitung der Regeneration des Partikelfilters (45) und die Regeneration des NOx-Speicherkatalysators (42) durch eine Nacheinspritzung von Kraftstoff in zumindest einen Brennraum der Brennkraftmaschine (10) oder durch eine Einspritzung von Kraftstoff in den Abgaskanal (30) vor dem NOx-Speicherkatalysator (42) gestartet wird, wobei als Regelgröße für die Regelung der Kraftstoffzugabe zur Regeneration des Partikelfilters (45) das Ausgangssignal einer zwischen dem NOx-Speicherkatalysator (42) und dem Partikelfilter (45) angeordneten ersten Lambdasonde (43) verwendet wird, **dadurch gekennzeichnet, dass** als Regelgröße für eine Regelung der Kraftstoffzugabe zur Regeneration des NOx-Speicherkatalysators (42) das Ausgangssignal einer zweiten vor dem NOx-Speicherkatalysator (42) angeordneten Lambdasonde (41) verwendet wird, dass die Regelung der Kraftstoffzugabe zur Einleitung der Regeneration des Partikelfilters (45) und die Regelung der Kraftstoffzugabe zur Regeneration des NOx-Speicherkatalysators (42) mit dem selben Regler (51) mit unterschiedlichen Regelparametern durchgeführt wird, dass der Regler (51) zur Regeneration des Partikelfilters (45) mit dem Ausgangssignal der ersten Lambdasonde (43) und zur Regeneration des NOx-Speicherkatalysators (42) mit dem Ausgangssignal der zweiten Lambdasonde (41) beaufschlagt wird, wobei dem Regler (51) mittels eines Umschalters (52) während der Regeneration des NOx-Speicherkatalysators (42) das Ausgangssignal der zweiten Lambdasonde (41) zugeführt wird und während der Regeneration des Partikelfilters (45) das Ausgangssignal der ersten Lambdasonde (43) zugeführt wird.

2. Verfahren nach Anspruch 1, **dadurch gekennzeichnet, dass** die Regelung der Kraftstoffzugabe zur Einleitung der Regeneration des Partikelfilters (45) durch eine Anpassung des Sollwertes der Lambdaregelung erfolgt.

3. Verfahren nach Anspruch 1, **dadurch gekennzeichnet, dass** die Nacheinspritzung von Kraftstoff in zumindest einen Brennraum der Brennkraftmaschine (10) aus mehreren Teileinspritzungen besteht.

4. Vorrichtung zur Regelung einer Kraftstoffzugabe zur Einleitung der Regeneration eines im Abgaskanal (30) einer Brennkraftmaschine (10) angeordneten Partikelfilters (45) und eines in Abgasrichtung vor dem Partikelfilter (45) angeordneten NOx-Speicherkatalysators (42), wobei die Vorrichtung derart konfiguriert ist, daß die Einleitung der Regeneration des Partikelfilters (45) und die Regeneration des NOx-Speicherkatalysators (42) durch eine Nacheinspritzung von Kraftstoff in zumindest einen Brennraum der Brennkraftmaschine (10) oder durch eine Einspritzung von Kraftstoff in den Abgaskanal (30) vor dem NOx-Speicherkatalysator (42) gestartet wird, wobei zwischen dem NOx-Speicherkatalysator (42) und dem Partikelfilter (45) eine erste Lambdasonde (43) angeordnet ist, wobei die Vorrichtung derart konfiguriert ist, daß zur Regelung der Kraftstoffzugabe zur Regeneration des Partikelfilters (45) das Ausgangssignal der ersten Lambdasonde (43) vorgesehen ist, wobei ein Regler (51) in einer Motorsteuerung (50) vorgesehen ist und wobei der Regler (51) zur Regelung der Kraftstoffzugabe zur Einleitung der Regeneration des Partikelfilters (45) mit dem Ausgangssignal der ersten Lambdasonde (43) beaufschlagt ist, **dadurch gekennzeichnet, dass** vor dem NOx-Speicherkatalysator (42) eine zweite Lambdasonde (41) angeordnet ist, dass der Regler (51) zur Regelung der Kraftstoffzugabe zur Regeneration des NOx-Speicherkatalysators (42) mit dem Ausgangssignal der zweiten Lambdasonde (41) beaufschlagt ist und dass ein Umschalter (52) zur Beaufschlagung des Reglers (51) mit dem Ausgangssignal der ersten oder der zweiten Lambdasonde (41, 43) vorgesehen ist.

## Claims

1. Method for controlling a fuel feed for initiating the regeneration of a particle filter (45) arranged in the exhaust duct (30) of an internal combustion engine (10) and an NOx storage-type catalytic converter (42) which is arranged upstream of the particle filter (45) in the direction of the exhaust gas and has the purpose of oxidizing hydrocarbons, wherein the initiation of the regeneration of the particle filter (45) and the regeneration of the NOx storage-type catalytic converter (42) are started by after-injection of fuel into at least one combustion chamber of the internal combustion engine (10) or by injection of fuel into the exhaust duct (30) upstream of the NOx storage-type catalytic converter (42), wherein the output signal of a first lambda probe (43) which is arranged between the NOx storage-type catalytic converter (42) and the particle filter (45) is used as a controlling variable for the regulation of the fuel feed for the regeneration of the particle filter (45), **characterized in that** the output signal of a second lambda probe (41) which is arranged upstream of the NOx storage-type catalytic converter (42) is used as a controlling variable for controlling the fuel feed for the regeneration of the NOx storage-type catalytic converter (42), **in that** the regulation of the fuel feed for initiating the regeneration of the particle filter (45) and the regulation of the fuel feed for the regeneration of the NOx storage-type catalytic converter (42) are carried out with the same controller (51) with different controlling parameters, **in that** the output signal of the first lambda probe (43) is applied to the controller (51) for the regeneration of the particle filter (45), and the output signal of the second lambda probe (41) is applied for the regeneration of the NOx storage-type catalytic converter (42), wherein the output signal of the second lambda probe (41) is fed to the controller (51) by means of a changeover switch (52) during the regeneration of the NOx storage-type catalytic converter (42), and the output signal of the first lambda probe (43) is fed in during the regeneration of the particle filter (45).

2. Method according to Claim 1, **characterized in that** the fuel feed for initiating the regeneration of the particle filter (45) is regulated by adapting the setpoint value of the lambda control.

3. Method according to Claim 1, **characterized in that** the after-injection of fuel in at least one combustion chamber of the internal combustion engine (10) is composed of a plurality of partial injections.

4. Device for controlling a fuel feed for initiating the regeneration of a particle filter (45) arranged in the exhaust duct (30) of an internal combustion engine (10) and a storage-type catalytic converter (42) arranged upstream of the particle filter (45) in the direction of the exhaust gas, wherein the device is configured in such a way that the initiation of the regeneration of the particle filter (45) and the regeneration of the NOx storage-type catalytic converter (42) are started by an after-injection of fuel into at least one combustion chamber of the internal combustion engine (10) or by an injection of fuel into the exhaust duct (30) upstream of the NOx storage-type catalytic converter (42), wherein a first lambda probe (43) is arranged between the NOx storagetype catalytic converter (42) and the particle filter (45), wherein the device is configured in such a way that the output signal of the first lambda probe (43) is provided for controlling the fuel feed for the regeneration of the particle filter (45), wherein a controller (51) is provided in an engine controller (50), and wherein the output signal of the first lambda probe (43) is applied to the controller (51) for controlling the fuel feed for the initiation of the regeneration of the particle filter (45), **characterized in that** a second lambda probe (41) is arranged upstream of the NOx storage-type catalytic converter (42), **in that** the output signal of the second lambda probe (41) is applied to the controller (51) for the regeneration of the fuel feed for the regeneration of the NOx storage-type catalytic converter (42), and **in that** a changeover switch (52) for applying the output signal of the first or second lambda probe (41, 43) to the controller (51) is provided.

## Revendications

1. Procédé de régulation d'une introduction de carburant pour le déclenchement de la régénération d'un filtre à particules (45) disposé dans le conduit de gaz d'échappement (30) d'un moteur à combustion interne (10) et d'un catalyseur accumulateur de NOx (42) disposé dans la direction des gaz d'échappement en amont du filtre à particules (45) pour oxyder des hydrocarbures, dans lequel le déclenchement de la régénération du filtre à particules (45) et la régénération du catalyseur accumulateur de NOx (42) sont démarrées par une post-injection de carburant dans au moins une chambre de combustion du moteur à combustion interne (10) ou par une injection de carburant dans le conduit de gaz d'échappement (30) en amont du catalyseur accumulateur de NOx (42), dans lequel le signal de sortie d'une première sonde lambda (43) disposée entre le catalyseur accumulateur de NOx (42) et le filtre à particules (45) est utilisé en tant que grandeur de régulation destinée à la régulation de l'introduction de carburant afin de régénérer le filtre à particules (45), **caractérisé en ce que** le signal de sortie d'une deuxième sonde lambda (41) disposée en amont du catalyseur accumulateur de NOx (42) est utilisé en tant que grandeur de régulation destinée à une régulation de l'introduction de carburant afin de régénérer le catalyseur accumulateur de NOx (42), **en ce que** la régulation de l'introduction de carburant pour le déclenchement de la régénération du filtre à particules (45) et la régulation de l'introduction de carburant afin de régénérer le catalyseur accumulateur de NOx (42) sont effectués avec le même régulateur (51) et avec des paramètres de régulation différents, **en ce que** le régulateur (51) est soumis au signal de sortie de la première sonde lambda (43) afin de régénérer le filtre à particules (45) et au signal de sortie de la deuxième sonde lambda (41) afin de régénérer le catalyseur accumulateur de NOx (42), dans lequel le signal de sortie de la deuxième sonde lambda (41) est délivré au régulateur (51) au moyen d'un commutateur de basculement (52) pendant la régénération du catalyseur accumulateur de NOx (42) et le signal de sortie de la première sonde lambda (43) est délivré au régulateur pendant la régénération du filtre à particules (45).

2. Procédé selon la revendication 1, **caractérisé en ce que** la régulation de l'introduction de carburant pour le déclenchement de la régénération du filtre à particules (45) est effectuée par une adaptation de la valeur théorique de la régulation lambda.

3. Procédé selon la revendication 1, **caractérisé en ce que** la post-injection de carburant dans au moins une chambre de combustion du moteur à combustion interne (10) est constituée de plusieurs injections partielles.

4. Dispositif de régulation d'une introduction de carburant pour le déclenchement de la régénération d'un filtre à particules (45) disposé dans le conduit de gaz d'échappement (30) d'un moteur à combustion interne (10) et d'un catalyseur accumulateur de NOx (42) disposé en amont du filtre à particules (45) dans la direction des gaz d'échappement, dans lequel le dispositif est configuré de manière à ce que le déclenchement de la régénération du filtre à particules (45) et la régénération du catalyseur accumulateur de NOx (42) soient démarrés par une post-injection de carburant dans au moins une chambre de combustion du moteur à combustion interne (10) ou par une injection de carburant dans le conduit de gaz d'échappement (30) en amont du catalyseur accumulateur de NOx (42), dans lequel une première sonde lambda (43) est disposée entre le catalyseur accumulateur de NOx (42) et le filtre à particules (45), dans lequel le dispositif est configuré de manière à ce que le signal de sortie de la première sonde lambda (43) soit utilisé pour réguler l'introduction de carburant afin de régénérer le filtre à particules (45), dans lequel il est prévu un régulateur (51) dans une unité de commande de moteur (50) et dans lequel le régulateur (51) est soumis au signal de sortie de la première sonde lambda (43) pour réguler l'introduction de carburant pour le déclenchement de la régénération du filtre à particules (45), **caractérisé en ce qu'**une deuxièmes sonde lambda (41) est disposée en amont du catalyseur accumulateur de NOx (42) de manière à ce que le régulateur (51) soit soumis au signal de sortie de la deuxième sonde lambda (41) pour réguler l'introduction de carburant afin de régénérer le catalyseur accumulateur de NOx (42) et **en ce qu'**il est prévu un commutateur de basculement (52) pour soumettre le régulateur (51) au signal de sortie de la première ou de la deuxième sonde lambda (41, 43).
